# EUROPEAN PATENT APPLICATION

(11) **EP 1 818 694 A1**
(43) Date of publication of application: **15.08.2007**
(21) Application number: 06075305.0
(22) Date of filing: 14.02.2006
(51) Int. Cl.: G02B 1/10, A47G 1/00

(54) **Picture frame with an anti reflective glass plate**

(71) Applicant: DSM IP Assets B.V., 6411 TE Heerlen (NL)
(72) Inventor: Thies, Jens Christoph, 6229 AL Maastricht (NL)
(74) Representative: Renkema, Jaap

(57) **Abstract**

An article for in-house use, preferably a picture frame or a show case, comprising a frame with an anti-reflective glass plate, the glass plate having on at least a part of at least one of its surfaces a light reflection reducing coating wherein the wherein the coating contains nano-size particles and a binder, the coating having an arithmetic average roughness of 2-50 nm, and having per reflective coated side a minimum reflection at a wavelength between 400 and 800 nm of about 2% of less.

## Description

The invention relates to a frame, in particular a picture frame, with an anti-reflective glass plate, to the use of an anti-reflective glass plate, and to a process for making an anti-reflective glass plate, the glass plate having on at least a part of at least one of its surfaces a light reflection reducing coating.

Picture frames with glass plates are well known, and used e.g. for framing photo's, aquarelle or watercolour paintings, drawings, etches and posters. Untreated glass plates show a strong light reflection generally of about 8% when looking at the glass at normal angle (90°). The reflection increases sharply at sharper angles. This reduces the clarity of the picture, and is therefore unwanted. A known way to reduce the reflection is to etch one side of the glass plate to obtain an irregular surface, the irregularities having a distance between high and low points of about 300 nm to several micrometer. These irregularities are thus large enough to scatter reflected light in a diffuse manner. Thereby, the glass plate has anti-glare properties. The disadvantage of this type of anti-glare glass plate is that in case the distance between the glass plate and the picture slightly increases, the clarity of the image diminishes and the transparency is reduced. A further known glass plate for picture frames is available from Denglass & Schott. That type of glass plate - as also described in US 5582859 - contains three coatings on each side of the glass in order to achieve the antireflective properties. Typically, SiO₂; TiO₂, SiO₂/TiO₂ layers cause destructive interference of reflected light from the various optical interfaces. One disadvantage of that system is its uneconomic production process, as the plate has to be dip coated three times, and baked three times. Further, the properties of the glass are very good if looked at normal angle, but its angle dependence requires further improvement.

Aim of the present invention is to provide frames like picture frames and other in-house frames with an anti reflective glass plate which requires only one layer for achieving the anti-reflective properties.

A further object of the invention is to provide frames with an anti reflective glass plate that has high optical transparency and clarity, precluding the problem of prior art anti-glare glass plates.

Yet a further object of the invention is to provide a coating with a better angle dependency that the three layer prior art coating.

Thus, the present invention provides an article for in-house use, comprising a frame and an anti-reflective glass plate, the glass plate having on at least a part of at least one of its surfaces a light reflection reducing coating, wherein the coating contains nano-size particles and a binder, the coating having an arithmetic average roughness of 2-50 nm, and having per reflective coated side a minimum reflection at a wavelength between 400 and 800 nm of about 2% or less.

The present invention further provides for the use of an anti-reflective glass plate in in-house applications, the glass plate having on at least a part of at least one of its surfaces a light reflection reducing coating, wherein the coating contains nano-size particles and a binder, the coating having an arithmetic average roughness of 2-50 nm, and having per reflective coated side a minimum reflection at a wavelength between 400 and 800 nm of about 2% of less.

The present invention furthermore provides for a process of making a glass plate for an article for in-house use, the process comprises the steps of
(1) cleaning the glass
(2) providing on at least a part of at least one side of the glass plate a coating, the coating comprising nano size particles, a binder and a solvent
(3) drying and curing the coating
as to provide a coating layer having an arithmetic average roughness of 2-50 nm, and having per reflective coated side a minimum reflection at a wavelength between 400 and 800 nm of about 2% of less.

It is an advantage, that the angle dependence of the anti reflective coating is substantially less than the prior art coating.

It is a further advantage, that only one layer is needed to obtain substantial reduction in the reflection of visible light.

The transparency of the anti reflective glass plate is high. For common float glass, which has an absorbance of 1 to 1,5% at 2 mm thickness, the transparency is generally about 94% or higher at 2 mm thickness at wavelength between 400 and 800 nm, preferably about 96% or higher, more preferably about 97% or higher, most preferably about 98% or higher.

A frame as used in the present application is a structure to hold the glass plate at a fixed place. In one embodiment, it consists of clamps at at least 3 places of a glass plate (e.g. two top corners and in the middle of the bottom of a square glass plate. Preferably, the clamps are at all corners of the glass plate. In another embodiment, the frame consists of at least a partial enclosure for the glass plate. Generally, at least two sites of the glass plates are enclosed, more preferably two opposite sites. Often all sites are enclosed by a frame. The frame can be of metal, wood, plastic or the like. Any known frame material can be used.

In one embodiment, the frame is a picture frame, the word picture being broadly interpreted as comprising photo's, paintings, posters, etches, drawings and the like.

In another embodiment, the frame is a show-case, comprising on at least one side a glass plate according the invention.

A glass plate is contemplated by the inventors to have a wide meaning, including quartz, polycarbonate or other plate like materials that have a high transparency, preferably a transparency of about 80% or more at 2 mm thickness, more preferably about 90% or more at 2 mm thickness.

Generally, the glass plate has a thickness of 0.5 mm or more, preferable 1 mm or more, most preferably, about 1.8 mm or more. In general, the glass plate has a thickness of about 10 mm or less, preferably 6 mm or less, more preferable about 4 mm or less, and most preferred, about 3 mm or less. However, the thickness of the glass is not critical, and could be 10 cm or less.

In one embodiment, the glass plate is organic, for example polymeric such as polyethylene naphthalate (PEN), polycarbonate or polymethylmethacrylate (PMMA), polyester or another polymeric material with similar optical properties. This embodiment is preferred in case shatter-proof glass plates are needed. In this embodiment, it is preferred to use a coating that can be cured at temperatures sufficiently low that the organic material remains substantially in its shape and does not substantially discolour due to thermal degradation. One preferred material is UV-light curable material as e.g. described in WO2004/104113. In another preferred embodiment the plate is first coated with a UV curable hard coat such as is known in the art in for example US4455205, and is then coated with the anti-reflection (AR) coating. In this way the adhesion of the AR coating to the substrate is improved and the scratch resistance of the entire system is improved, particularly where the plate is an organic material such as a polymer.

In another embodiment, the substrate is inorganic. More in particular ordinary glass or quartz. Ordinary float glass is most preferred, as it is a cheap and widely available material

An anti reflective glass plate is meant to be a glass plate (as defined) with a light reflection reducing coating on at least part of at least one side of the glass.

The anti reflective glass plate will generally have a size of 10 cm by 10 cm or larger, preferably about 20 cm by 20 cm or larger. The maximum size is mainly dictated by practical consideration, and will generally be 2 by 3 meter or less. In one embodiment, the anti reflective glass plate preferably has a size of about 20 by 30 cm or multiples thereof, such as preferably 30 by 40 and most preferably 90 by 130 cm or the multiple thereof. In another embodiment, the anti reflective glass plate preferably has a size of about 30 by 40 inch (about 72 by 96 cm) or multiple thereof, such as for example about 60 by 40 inch (about 144 by 96 cm).

At least part of the surface is coated with the anti reflective coating. Generally about 20% or more of the surface will be coated, preferably about 50% or more, most preferred, about 90% or more of the surface is coated with the anti-reflective coating.

The anti reflective coating is such, that - measured for one coated side - at a wavelength between 400 and 800 nm (the visible light region) the minimum reflection is about 2% or less, preferably about 1.5% or less, and most preferably about 1% or less. The average reflection at one side, over the region of 400 to 800 nm generally will be about 2.5% or less, preferably about 2% or less, more preferred, about 1.5% or less, and most preferred about 1% or less. Generally, the minimum in the reflection will be at a wavelength between 400 and 800 nm, preferably at a wavelength of 450 nm or higher, and more preferred at 500 nm or higher. Preferably, minimum is at a wavelength of 700 nm or lower, more preferred at 600 nm or lower. The optimal wavelength for the human eye is a minimum reflection around 550 nm as this is the wavelength (colour) at which the human eye is most sensitive. In case a colour shade is required, a minimum at lower or higher wavelength can be chosen. The reflection can be measured with any suitable reflectometer or colorimeter as known to the skilled artisan. Generally, the reflection will show a slope or a curve over the 400-800 nm wavelength. The minimum is defined as either a minimum in a curve, or the lower end of the slope, being at 800 or at 400 nm.

Generally, at least one side of the glass plate needs to be coated e.g. in case a picture is glued to the other side of the glass. However, in one embodiment of the invention, the glass plate has an anti reflective coating on both sides. This may be achieved by coating both sides of a glass plate. It is also possible to laminate two glass plates which are coated on one side, whereby the non-coated sides are laminated to each other. It is preferred, that the glass plate in use has on both outermost sides an anti reflective coating, more preferred, an anti-reflective coating according this invention. It is, however, also possible to combine different techniques to obtain anti-reflective or anti-glare properties. In another embodiment, one side of a glass plate is coated with an anti reflective coating according the present invention, and the other side of the glass is laminated with a transparent film with an anti-glare or anti reflective coating, preferably a coating according the present invention; the coatings according the present invention may be the same or different in chemical composition. In a further embodiment of the invention the film used to stick two glass plates together may be a UV absorbing film in order to lend UV shielding properties to the picture or image.

Preferably, the reflection of the glass plate (with a coating on two sides) at the wavelength exhibiting a minimum is about 3% or less, preferably about 2% or less, and more preferred about 1% or less. The average reflection over a 400-800 nm wavelength range is generally about 4% or less, preferably about 3% or less, and most preferred about 2% or less.

A light reflection reducing (or anti reflective) coating is a coating that reduces the reflection of light from an article at at least one wavelength between 400 and 800 nm, as measured at the normal incident angle. Measurements are carried out on the coated and uncoated article. Preferably the reduction in reflection is about 30% or more, preferably about 50 % or more, more preferably about 70% or more, even more preferably about 85% or more. The reduction in reflection as expressed in a percentage is equal to 100x(reflection of the uncoated article - the reflection of the coated article)/ (reflection of uncoated article).

The arithmetic average roughness can be measured by Atomic Force Microscopy (AFM) and is generally about 2 nm or larger, preferably about 5 nm or larger, more preferably about 10 nm or larger, most preferable about 20 nm or larger. The arithmetic average roughness generally will be about 50 nm or lower, preferably 45 nm or lower.

The coating of the present invention generally exhibits voids in the coating thereby having a nano porous structure. The voids aid in obtaining anti reflective properties. Generally, the coating comprises about 20 volume% or more of void volume. Void volume is herewith defined as open space between the particle/binder in principle filled with ambient air. Preferably the voids represent about 30 volume% or more, even more preferred the voids represent about 40 volume% or more; most preferred, the voids represent about 50 vol.% or more. Generally, the coating exhibits voids in the coating of about 90% or less, in another embodiment about 80 volume% or less; and in a further embodiment about 70 vol.% or less.

The framed glass plates with the anti reflective coating are for use in house. This means, that during the envisaged life of the framed glass, the glass is not exposed to prolonged, direct rain, sunlight, wind and the like. It has been discovered by the inventors, that the nano porous structure of the coating precludes actual extensive outside use, but that it very well withstands normal household cleaning processes with water, water alcohol mixtures, water detergent mixtures, water alcohol detergent mixtures and other common house-hold cleaning fluids. Examples of commonly used cleaning fluids are glassex® and windex® (isopropanol, water, surfactant, pH ≈ 10-11), or fluids comprising acetone, methyl-ethyl-ketone, alcohol and water. Generally, the first time that an anti reflective glass plate is cleaned, the reflection may change with 0.1-0.4 %, but thereafter, the reflection remains virtually constant. It was unexpected that the nano porous coating does not tear or wear from even regular use of house hold chemicals. Preferably, the coating exhibits a change in reflectivity of about 0.4% or less after 2 hrs immersion in glassex®, more preferable, the change is about 0.3% or less. Preferably, the coating exhibits a steel wool resistance, as measured as shown in the examples, of A. Preferably, the coating exhibits - after 2 hours immersion in glassex® - a steel wool rating of B or better.

In order to protect the picture from damage by UV light, it is preferred to provide a UV screening or blocking coating on the glass plate. The UV blocking coating may be provided on the glass before applying the anti-reflective coating. This is preferred, because otherwise the nano porous structure and roughness character may decrease, and thereby the antireflective properties would be negatively influenced. However, if the UV screening coating does not substantially influence the anti reflective layer, it may be applied on the antireflective layer. UV blocking coatings are known to those skilled in the art, and are e.g. described in US5371138.

Other useful coatings that can be applied on the glass substrate are antistatic and/or low-e coatings; the low-e coatings being coatings that have a low emission of infra-red, thereby having low-heat emission through the glass plate.

As such, a number of light reflection reducing coatings are known, but non of these describe or suggest the use in frames for in-house applications. In US-2,601,123 for example a glass lens or other optical element is disclosed, on which surface a coating comprising spherical particles is applied. As spherical particles have one diameter, length and width are equal so that the aspect ratio is about 1, and generally about 1.1 or less. In EP-A 1167313 a coated automotive glass shield is described, the coating being prepared by mixing non-aggregated silica fine particles and/or linear aggregated silica fine particles, a hydrolysable metal compound, water and a solvent. In W02004/104113 a nano structured coating is described, prepared from a coating comprising nano particles having a reactive organic group on their surface, a solvent and optionally some further compounds with a polymerisable group.

The process for making an antireflective glass plate for a frame for in-house use comprises the steps of
(1) cleaning the glass
(2) providing on at least a part of at least one side of the glass plate a coating, the coating comprising nano sized particles, a binder and a solvent
(3) drying and curing the coating as to provide a coating layer having an arithmetic average roughness of 2-50 nm, and having per reflective coated side a minimum reflection at a wavelength between 400 and 800 nm of about 2% of less.

For all coating processes, cleaning is an important step, as small amounts of contaminant such as dust, grease and other organic compounds cause the anti reflective coating, or other coatings to show defects. Cleaning can be done in a number of ways, such as firing (heating up to 600-700 °C; applicable if an inorganic substrate is used); and/or cleaning with a cleaning fluid such as soap in demineralised water, alcohol, or acidic or basic detergent systems. When using a cleaning fluid, generally, the glass plate is dried at a temperature between 20 °C and 400 °C, optionally with applying an air flow.

The coating is thereafter provided on at least a part of at least one side of the glass plate. A number of ways are available to apply thin coatings on flat substrates. Any way of applying a wet coating suitable for obtaining the required thickness would be acceptable. Examples of suitable techniques are meniscus (kiss) coating, spray coating, roll coating, spin coating or dip coating. Dip coating is preferred, as it provides a coating at two sides of the plate, and gives a repeatable and constant thickness. Spin coating can easily be used if smaller glass plates are used, such as ones with 20 cm or less in width or length. Meniscus, roll or spray coating is useful for continuous processes.

The coating generally has a thickness of 1-5 µm before drying. The required wet thickness is dependant on the solid content of the coating, and is not important as such. The thickness generally is measured after drying and curing, but may be measured after drying only, i.e. after evaporation of the non-reactive solvent(s). The thickness of the wet coating is influenced by the viscosity of the coating, and the dip speed in case of dip coating; each technique has its own - known - ways to influence the thickness of a coating. The thickness of the coating when substantially dry (i.e. with about 20wt% or less of non-reactive solvent relative to the solid material) is generally about 300 nm or less, preferably about 200 nm or less, most preferred about 170 nm or less. Generally, the dry, uncured coating will have a thickness of about 30 nm or more, preferable about 50 nm or more, most preferably about 60 nm or more. Thickness is measured either spectroscopically (reflectometery or ellipsometery) or by directly observing a fracture surface by electron microscopy.

In one embodiment, the process comprises a further step, the coated glass plate being subjected to a quality control step after coating, but before curing the coating. After coating, but before curing, the antireflective properties are well discernable although slightly different from the cured coated plate. For example, upon cure, the coating may shrink, causing a shift in wavelength at minimum reflection. If glass plates would be not within specifications, these plates can be taken out before curing, thereby saving the costs of curing. Furthermore, these plates can be cleaned, and used again in the process of the invention.

The coating used in this invention comprises nano sized particles, a binder and a solvent

Examples of suitable particles are particles comprising lithium fluoride, calcium fluoride, barium fluoride, magnesium fluoride, titanium dioxide, zirconium oxide, antimony doped tin oxide, tin oxide, aluminum oxide, and silicon dioxide. Preferably particles comprising silicon dioxide, most preferably particles consisting for at least for 90 wt.% of silicon dioxide are used.

In one embodiment of the invention, the coating comprises particles having an average aspect ratio larger than 1.5, as the glass plate shows an advantageous low reflection of light.

Preferably the aspect ratio of the particles is larger than 2, more preferably larger than 4, even more preferably larger than 6, even still more preferably larger than 8, most preferably larger than 10. Generally, the aspect ration will be about 100 or lower, preferably about 50 or lower.

The sizes of the particles may be determined by spreading a dilute suspension of the particles over a surface and measuring the sizes of individual particles by using microscopic techniques, preferably scanning electronic microscopy (SEM) or atomic force microscopy (AFM). Preferably the average sizes are determined by measuring the sizes of 100 individual particles. The aspect ratio is the ratio between the length and the width of a particle. In case of rods and worm- like particles the length is the largest distance between two points in the particle and the width is the largest diameter as measured perpendicular to the central axis of the particle, both the length and the width are measured of the projection of the particles as observed under the microscope.

Preferably rod-like or worm-like particles, more preferably worm-like particles are used. Worm-like particles are particles having a central axis that deviates from a straight line. Examples of worm-like particles are known by the trade name Snowtex (IPA-ST-UP, particles have a diameter of 9-15 nm with a length of 40-300 nm), as delivered by Nissan Chemical.

Preferably the particles are nano particles. Preferably the nano particles have a length of less than 1000 nm, more preferably of less than 500 nm, even more preferably of less than 350nm.

In another embodiment, the coating comprises particles are largely spherical (i.e. having an aspect ratio of about 1.2 or lower, preferably of about 1.1 or lower), and generally have a size of about 10 nm or larger, preferably 20 nm or larger, and most preferred 40 nm or higher. Generally, the particles will have a size of 200 nm or smaller, preferably 150 nm or smaller, and most preferred about 100 nm or smaller. With respect to other characteristics, the description of the non-spherical particles described above is equally applicable to the spherical particles. The advantage of using largely spherical particles is that the volume nano-pores resulting from the space between spherical particles is small relative to the space between non-spherical particles and thus the coatings derived from spherical particles suffer less from filling of the nano-pores via capillary forces leading to a loss in anti-reflective performance.

In another embodiment, the coating comprises mixtures of above described particles.

The coating comprises a binder, which has as main function to keep the particles attached and adhered to the glass plate. Preferably, the binder forms covalent bonds with the particles and the substrate. For this purpose, the binder - before curing - generally contains inorganic compounds with alkyl or alkoxy groups, but other compounds may be suitable as well. Further, the binder preferably polymerises itself to form a continuous polymeric network.

In one embodiment of the invention the binder of the coating consists substantially of an inorganic binder, as such coating shows very good mechanical properties and good adhesion to the substrate, resulting in for example high puncture resistance, high scratch resistance and good wear resistance.

The inorganic binder preferably comprises one or more inorganic oxides, for example silicon dioxide. The binder preferably is a crosslinked inorganic material that covalently links the particles and the substrate.

The inorganic binder may result after the cross-linking reaction and heating of the non-reacted binder, for example an alkoxy silane, an alkyl silicate or a sodium silicate. As alkoxy silanes preferably tri and tetra alkoxy silanes are used. Preferably, ethyl silicate binders are used. Due to the heating step these silicium compounds are converted into silicon dioxide.

In another embodiment, the binder is an organic coating, wherein the particles bear reactive organic groups, and optionally, further coating material is present which has groups, reactive with the reactive groups on the particles. This embodiment is preferred in case the glass plate is of organic nature, and cannot withstand baking temperatures of up to 400 °C. In one embodiment, the reactive groups on the particles are (meth)acrylate, and the reactive groups on the further coating material is of ethylenic unsaturated, preferably (meth)acrylate. Suitable coatings are described in WO2004/104113.

By decreasing the concentration of binder in the coating the reflection reducing properties are improved. In this way the space between the particles is not completely filled with the binder.

Surprisingly even at low binder concentration good mechanical properties and adhesion are obtained.

Generally, the coating comprises an amount of non-reactive solvent to adjust the viscosity of the particles and binder to such a value, that thin layers can be applied on the glass plates. Generally the viscosity of the coating is about the value of the neat non-reactive solvent, and is the amount of solids in the coating about 5 wt% or less, preferably, about 4% or less, more preferred about 3% or less. To have an economic process, the amount of solids generally will be about 0.5 wt% or more, preferably about 1 wt% or more, more preferably about 2 wt% or more. Generally, the viscosity will be about 2.0 mPa.s or more, preferably 2.2 mPa.s or more and even more preferably about 2.4 mPa.s or more. Generally, the viscosity is about 20 mPa.s or less, preferable about 10 mPa.s or less, more preferably about 6 mPa.s or less, and even more preferred about 3 mPa.s or less. The viscosity can be measured with a Ubbelohde PSL ASTM IP no 1 (type 27042)

Depending on the chemistry of the binder, many solvent are useful. Suitable examples of solvents include water, non-protic organic solvents, and alcohols.

In one embodiment, with an inorganic binder an organic solvent is used, more preferably a mixture of water and alcohol is used as the solvent. The concentration of solids in the coating composition may be between 1 and 20 weight (wt) %, preferably between 1 and 5 wt. %. The wt % of the particles, based on 100% of solids is for example more than 50 wt.%, preferably more than 60 wt.% and most preferably more than 70 wt.% in the final coating. The concentration of solids is the concentration of all components that don't evaporate after the application of the coating composition to the article.

The coating composition may comprise a compound to catalyze the conversion of the precursor into the binder. In case of alkoxy silane or ethyl silicate binders as the precursor preferably an acid, for example acetic acid is used as the catalyst. The catalyst preferably is added to the coating composition just prior to its application. In case of UV curable materials, a light sensitive initiator is generally used as catalyst.

The coating composition may also comprise a hydrophobic inorganic binder precursor. The addition of such a precursor can lead to hydrophobic and even super-hydrophobic properties of the resulting coating while retaining the anti-reflective function. Preferably a hydrophobic coating is obtained with static water contact angles of greater than 90° , more preferably with a static water contact angles of greater than 140°. An example of such a hydrophobic binder precursor additive binder can be, but is not limited to, 1H,1H,2H,2H-(Perfluorooctyl) triethoxysilane (see formula I)

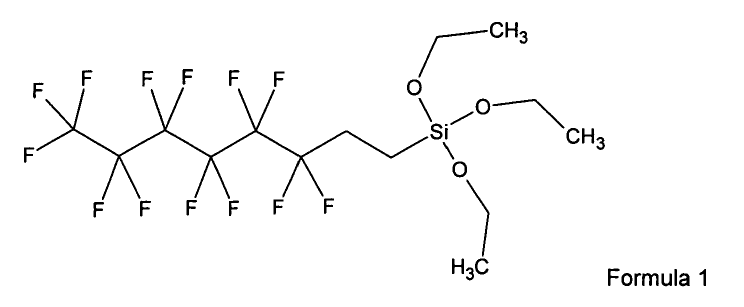

For organic binders, a fully organic solvent system is preferred, although some water may be present. Examples of suitable solvents include 1,4-dioxane, acetone, chloroform, cyclohexane, diethylacetate, propanol, ethanol, methanol, butanol, methyl ethyl ketone, methyl propyl ketone, tetrahydrofuran, toluene and tetrafluoroisopropanol. Preferred solvents are methanol, methyl ethyl ketone, isopropanol or 1-methoxypropan-2-ol.

After application of the coating composition the solvent is allowed to evaporate and in one embodiment the inorganic binder precursor is crosslinked and converted into the binder. This last step normally is carried out by heating to for example 100 - 600 °C, preferably to 150 - 400 °C. In another embodiment, the binder is cured using UV light or heat cure, with temperatures of about 20-140 °C.

It is an advantage of the present invention that the coating is insensitive to moisture. Thus, in contrast to the three-layer coating, the space where the glass plates are coated need not to be humidity controlled, and humidity between for example 30 and 80% is acceptable. Further, the inorganic coating also is not sensitive to time delays between coating and curing. The organic UV curable coating is generally cured directly after application, although this is also not critical.

Preferably the coating composition is applied to the article in a thickness eventually resulting in a thickness after cure of about 50 nm or larger, preferably of about 70 nm or larger, more preferably about 90 nm or higher. Generally, the thickness after cure will be about 300nm or less, preferably of about 200nm or less, more preferably about 160 nm or less, and most preferred about 140 nm or less.

In one embodiment of the process, the coating application is applied to a glass plate before a tempering step of that glass plate. The tempering step is normally carried to introduce internal stresses in an ordinary glass plate by virtue of which it will fragments in small pieces when the glass plate breaks. The tempering step is usually carried out as known to those skilled in the art and involves heating up to 600 °C. One advantage of the coating according to the invention is that the coating can withstand this tempering process and can even be cured before or during the tempering process. In the later case the curing and tempering process are thus carried out in one step.

The anti reflective glass obtained according to the proces can be framed to give picture frames or other framed articles according to the invention.

The picture frames preferably comprise an anti reflective glass plate of the invention, a frame covering the 4 outer sites of the plates and a backing of card board, wood, plastic or other suitable material. Sometimes, the backing is also made of glass. Generally, the backing comprises elements to fasten the glass plate, frame and backing to each other. Such fastening means may also be separate items. Preferably, the backing comprises one or more rings, or the like, or a cord for hanging the picture frame onto a wall.

A show case according this invention preferably comprises all glass plates to be anti-reflective according this invention. Often, show cases have one, two or three sides which should be transparent and anti reflective.

The invention will be further elucidated by the following examples, without being limited thereto.

### Examples

The preparation of inorganic coatings systems based on particles both with a high and low aspect ratio is described in section A. Preparation of organic/inorganic hybrid coatings using UV curing are described in section B. The properties of the anti reflective coating systems are described in Section C.

The silica particles were delivered by Nissan Chemical and a summary of their properties is given in Table 1.

**Table 1. Types and properties of silica particles.**

| Particle | particle Size (nm) | SiO₂ (wt%) | H₂O (%) | Viscosity (mPa.s.) | Specific Gravity | pH | Particle Shape | Solvent |
|---|---|---|---|---|---|---|---|---|
| MT-ST | 10-15 | 30-31 | < 2.0 | < 5 | 0.98-1.02 | 2-4 | Spherical | Methanol |
| IPA-ST-UP | 9-15 | 15-16 | < 1.0 | < 20 | 0.85-0.90 | 2-4 | Worm-like* | Iso-propanol |

| | | | | | | | | |
|---|---|---|---|---|---|---|---|---|
| *worm-like particles have a high aspect ratio: a diameter of 9-15 nm and a length of 40-300 nm | | | | | | | | |

### Section A:

Coating formulations were prepared either by grafting reactive inorganic binder (alkoxy silanes) onto the surface of the silica particles (type IPA-ST-UP) and then mixing with a pre-hydrolysed binder (mixture B, see table 2) or by directly mixing the particles (type MT-ST) with the pre-hydrolysed binder.

Pre-hydrolysed alkoxy silane binder was made by adding an alkoxy silane, water and acetic acid to solvent. After 72 hours at room temperature the mixture was diluted with solvent to the desired concentration and hydrochloric acid was added to get a pH of 1 (mixture B). Table 2 shows the amounts of chemicals used.

**Table 2.**

| Material | Mixture B |
|---|---|
| Tetraethylorthosilicate | 11.9 wt-% |
| Water (hydrolysis agent) | 10.9 wt-% |
| Acetic acid | 1.2 wt-% |
| Isopropanol | 75.8 wt-% |
| Hydrochloric acid | 0.2 wt-% |
| Total | 100 wt-% |

Reactive inorganic binder precursor groups were grafted onto the worm like silica nano-particles by adding an alkoxy silane to a suspension of the oxide particles in solvent. Table 3 shows the amounts of chemicals used. After stirring, water was added to the mixture and the mixture was heated to 80°C and kept there for 4 hours. After cooling down the mixture was diluted with solvent to the desired concentration. At this point a certain amount of mixture B is added to the reaction mixture to get the desired final formulation suited for the dipping process (example formulation 1).

Example formulation 2 based on spherical nano-silica particles was prepared by adding pre-hydrolysed binder (mixture B) and water to a suspension of the spherical oxide particles in solvent. At this point the resultant mixture was diluted with solvent to the desired concentration for application to the substrate. Table 3 shows the amounts used.

**Table 3. Compounds in weight percentage used for inorganic AR liquid coating formulations. Weight percentages of silica particles are given in equivalent dry weight, i.e. weight percentage solids.**

| Material | Formulation 1 | Formulation 2 |
|---|---|---|
| Isopropanol (solvent) | 85.8 wt-% | 75.9 wt-% |
| ST-UP particles | 1.6 wt-% | |
| MT-ST particles | | 2.6 wt-% |
| Tetraethylorthosilicate | 3.8 wt-% | |
| Water (hydrolysis agent) | 5.0 wt-% | 8.3 wt% |
| Mixture B | 3.9 wt-% | 13.2wt-% |
| Total | 100 wt-% | 100 wt-% |

### A2: Preparation of an inorganic AR coating or film on a substrate

Thin films of the formulations 1 and 2 were prepared on glass slides by the following procedure. A glass plate was washed and dried thoroughly to prepare it for the dip coating process. The glass slide was then lowered into either formulation 1 or 2. It was drawn out of the formulations with a certain speed thus depositing a thin liquid layer of the coating formulation on the glass plate. After evaporation of the solvent the dried inorganic coating was cured in an oven for 4 hours at 450°C to ensure complete curing.

### B1. Modification of silica particles with polymerisable-groups

Radically polymerising groups were grafted onto worm like silica nano-particles by adding a trimethoxy-silane compound comprising an acrylate group (e.g., 3-(trimethoxysilyl)propyl acrylate) together with p-methoxy-phenol, a compound that inhibits polymerization of the acrylate groups, an acid and a catalytic amount of water to a suspension of the silica nano-particles in an isopropyl alcohol. After each addition the formulation was shortly stirred. After the final addition the mixture was stirred for at least one hour at room temperature. Table 4 shows the amounts of chemicals used

**Table 4. Compounds in weight percentage used for modification of worm-like silica nano- particles. Weight percentage of silica particles is given in equivalent dry weight, i.e. weight percentage solids.**

| Material | Modified nano-particle solution 1 |
|---|---|
| IPA-ST-UP particles | 14.9 wt% |
| 3-(trimethoxysilyl)propyl acrylate | 1.5 wt% |
| Hydroquinnone mono-methylether | 0.004 wt% |
| Water | 0.63 wt% |
| Isopropanol | 83.0 wt% |
| Total | 100 wt% |

### B2. Preparation of the inorganic/organic hybrid AR formulation

The acrylate modified silica particle solution was formulated to the example formulation 3 by adding various binders, photo-initiator, stabilizer and solvent. Table 5 shows the amounts of chemicals used. After stirring at room temperature for at least 6 hours the formulation 3 was ready for use.

**Table 5. Example formulation 3.**

| | |
|---|---|
| Particle solution 1. | 15.2 wt% |
| Trimethylolpropane propoxylate triacrylate | 0.28 wt% |
| Trimethylolpropane-tris(3-mercapto-propionate) | 0.06 wt% |
| 2-methyl-4'-(methylthio)-2-morpholino-propiophenone | 0.06 wt% |
| Propylgallate | 0.002 wt% |
| 1-methoxy-2-propanol | 84.4 wt% |
| Total | 100 wt% |

### B3. UV curable hard coat

The UV curable hard coat (HC) formulation (3) comprises (52 w-t% solids) acrylate surface modified silica particles (MT-ST, particles size 10-15nm), Dipentaerythritol pentaacrylate (28wt-% solids), Ethoxylated (9) trimethylolpropane triacrylate (18wt-% solids), photo-initiator Irgacure 184 from Ciba (2wt-% solids) and an amount of methanol as a solvent such that the final concentration of all solids is ca 50wt-%.

### B4. Preparation of a coating or film on a substrate

Thin films of various mixtures were prepared on glass or polycarbonate plates by the following procedure. The glass or polycarbonate plates were washed and dried thoroughly to prepare it for the dip coating process. If preferred a hard coat could be applied before applying example formulation 3. The glass or polycarbonate plate was then lowered into the hard coat formulation. It was pulled up with a certain speed thus depositing a thin liquid layer on the glass or polycarbonate plate. After evaporation of the solvent the thin hard coat layer was cured with UV radiation (Fusion UV Systems, D-bulb) at a dose of 0.8 J/cm² in air. To apply example formulation 3 onto the hard coat or directly onto the glass or polycarbonate plate, the glass or polycarbonate plate was lowered into example formulation 3. Again, it was pulled up with a certain speed and a thin liquid layer of the formulation was left deposited on the glass or polycarbonate plate. After evaporation of the solvent the thin layer was cured with UV radiation (Fusion UV Systems, D-bulb) under nitrogen at a dose of 2.0 J/cm²

### C. Properties of various AR coated plates

The following section describes the test methods used for determining properties of the various coated plates according to the invention. It also summarises their resulting properties in table 6.

### C1. Optical properties of coated plate

Reflectivity spectra were recorded using a Minolta spectrophotometer CM-2600D. All UV-VIS transmission measurements were performed using a Perkin Elmer Lambda 40 UVNIS spectrometer. The spectrometer is equipped with two irradiation sources, a halogen lamp and a deuterium lamp. Spectra were recorded between 370 and 800 nm with a step width of 1 nm. Scan speed was 120 nm/min and the slit width was 2nm.

### C2. Steel wool abrasion test

A flat circular steel surface (diameter = 2.1cm) was cover evenly with steel wool (grade: 0000) with a normal weight of 250g. The steel wool was then moved back and forth over the surface 5 times making for a total of 10 rubs over a distance of ca 5 to 10cm. At this point the surface of the coating is visually inspected and rated according to table 6 below.

**Table 6. Rating of abrasion resistance according to number of observable scratches after steel wool testing.**

| **Number of visible scratches** | **Rating** |
|---|---|
| 0-3 | **A** |
| 4-10 | **B** |
| 11-15 | **C** |
| 16-30 | **D** |
| Coating completely removed | **E** |

### C3. Summary of optical and abrasion resistance properties of AR coated plates

**Table 7. Summarised optical and abrasion resistance results for various AR coated plates**

| Example formulation | Substrate | Hard Coat | Minimum reflection per single side | Steel wool test rating |
|---|---|---|---|---|
| 1 | Glass | No | 0.41% | A |
| 2 | Glass | No | 1.73% | A |
| 3 | Glass | No | 1.02% | E |
| 3 | Glass | Yes | 1.50% | B-C |
| 3 | polycarbonate | No | 1.82% | E |
| 3 | polycarbonate | Yes | 2,39% | B |

### C4. Chemical stability test

In order to test the chemical stability requirements of an AR coated glass plate for indoor use the following emersion test in house hold glass cleaning fluids was used. The glass cleaning fluid used was Glassex®, which according to the manufacturers contains anionic surface active compounds (< 5%), water, isopropyl alcohol, glycol ether solvents, fragrance and dye (pH = 10-11). Given that during normal house hold cleaning of glass plates, the surface is exposed to such cleaning fluid for ca 20 seconds, a 1 hour immersion would be equivalent to 180 cleaning exposures. A summary of the optical properties and steel wool abrasion resistance after various time of immersion in the house hold cleaning fluid can be found in table 8 below.

**Table 8. Summary of the optical properties and steel wool abrasion resistance after various time of immersion in the house hold cleaning fluid.**

| Coated glass plate from: | Immersion time in cleaning fluid (hours) | Minimum reflection per single side | Steel wool test rating |
|---|---|---|---|
| Example Formulation 1 | 0 | 0.45% | A |
| Example Formulation 1 | 1 | 0.35% | A |
| Example Formulation 1 | 2 | 0.25% | B |
| Example Formulation 1 | 4 | 0.25% | B-C |
| Example Formulation 2 | 0 | 1.75% | A |
| Example Formulation 2 | 1 | 1.60% | A |
| Example Formulation 2 | 2 | 1.55% | B |

The data in the above table clearly shows that the coatings according to the invention can maintain good optical and mechanical properties after an immersion in cleaning liquid of between 1 to 2 hours.

### C5. Angle dependency of visible light transmission

The angle dependency of the optical properties of the single layer nano-structured AR coating according to the invention was compared with a commercial three layer sol gel system.

The comparative system consists of three optical layers applied progressively on both sides of the glass substrate by dip-coating. The first layer (directly on glass surface) consists of a TiO₂ + SiO₂ layer (refractive index (n) = 1.78, thickness = ca 77nm), then a ZrO₂ layer (n = 1.96, thickness = ca 140nm) and finally a SiO₂ layer (n = 1.45, thickness = ca 95nm).

The samples (2x5cm glass slides) were placed in the sampling beam while the reference beam was kept free (air). Samples were placed perpendicular (90°) to the incident beam. For measurements taken at oblique angles the sample was rotated from the position perpendicular to the incident beam and the angle deviation form this position (0°, 30°, 45° or 60°) is the angle quoted in the results.

After the spectra were recorded as described above, the average transmission across the visible spectral range (370nm to 800nm) was calculated. The average transmissions (Tₐᵥ) of the glass substrate, AR coated glass plate and the relative change in transmission at normal (0°) and 30°, 45° and 60° incident angles of the comparative 3 layer AR coated glass plate are shown in table 9. The corresponding data for the coated glass plate according to the invention from example formulation 1 can be found in table 10.

**Table 9. Summary of visible light transmission properties of a comparative 3 layer AR coated glass plate.**

| **Angle** | **0°** | **30°** | **45°** | **60°** |
|---|---|---|---|---|
| **Tₐᵥ coating (%)** | 96.86 | 95.81 | 94.4 | 85.87 |
| **Tₐᵥ substrate (%)** | 91.25 | 91.3 | 91.33 | 88.61 |
| **Relative change in %T** | 5.61 | 4.51 | 3.07 | -2.74 |

**Table 10. Summary of visible light transmission properties of an AR coated glass plate according to the invention from example formulation 1.**

| **Angle** | **0°** | **30°** | **45°** | **60°** |
|---|---|---|---|---|
| **Tₐᵥ coating (%)** | 95.07 | 94.87 | 94.29 | 88.86 |
| **Tₐᵥ substrate (%)** | 89.12 | 89.25 | 89.22 | 84.38 |
| **Relative change in %T** | 5.95 | 5.62 | 5.07 | 4.48 |

Different types of glass were used for the comparative sample than for the coating according to the invention from example formulation 1. The type of glass used for the comparative sample has a low iron content and therefore has a higher spectral transmission and appear less green to the eye. The glass plated used for the coating according to the invention is ordinary float glass and has a higher Iron content and thus a lower transmission. Therefore the increase in Tₐᵥ was calculated from the Tₐᵥ of the coated plates relative to the Tₐᵥ of appropriate non coated glass substrate.

It is clear from the data shown in table 9 and table 10 that at normal angle (0°), the coating according to the invention achieves a similar increase in the relative average transmission of visible light as the comparative glass plate; however this is achieved with only one optical layer rather than the three of the comparative coated glass plate.

Furthermore, the data show that the coated glass plates according to the invention maintain a much higher relative increase in transmission than the comparative 3 layer sample. Moreover at the angle of 60° the comparative 3 layer system actually has a negative relative transmission with respect to its substrate of - 2.74% while the coated glass plate according to the invention still maintains a relative increase in transmission of 4.48% at the same angle.

Moreover the observed colour changes of the reflected and/or transmitted light at oblique angles is much less pronounced, when viewed spectroscopically or by the human eye for the coating according to the invention than for the comparative 3 layer AR coated glass plate. As a result the coatings according to the invention are much better suited for indoor application such as picture frame and artistic display glass, as the colour of the reflection or of the displayed image will be much less affected by the coated glass plate according to the invention than that of the comparative 3 layer AR coated glass plate or other state of the art multi-layer AR coating systems at oblique viewing angles.

The glass plate was framed in an aluminium frame with a back of card-board and clips to fasten the glass, card-board and the frame.

## Claims

1. An article for in-house use comprising a frame with an anti-reflective glass plate, the glass plate having on at least a part of at least one of its surfaces a light reflection reducing coating wherein the coating contains nano-size particles and a binder, the coating having an arithmetic average roughness of 2-50 nm, and having per reflective coated side a minimum reflection at a wavelength between 400 and 800 nm of about 2% or less.

2. The article of claim 1, wherein the arithmetic average roughness is about 10 nm or larger

3. The article according to any one of claims 1 - 2, wherein the particles have an aspect ratio of larger than 1.5.

4. The article according to any one of claims 1 - 3, wherein the particles comprise an inorganic material.

5. The article according to any one of claims 1 - 4, wherein the anti reflective layer has about 20 volume% or more voids in the layer.

6. The article according to any one of claims 1-5, wherein the average reflection over wavelength of 400-800 nm is about 2% or less for a coated side

7. The article according to any one of claims 1 - 6, wherein both sides of the glass plate have an anti-reflective coating.

8. The article according to any one of claims 1 - 7, wherein the coating has a thickness between 50 nm and 250 nm.

9. The article according to any one of claims 1 - 8, wherein the glass plate has a size of 10 by 10 cm or larger.

10. The article according to any one of claims 1 - 9, wherein the article comprises an anti reflective glass plate, a frame and a backing.

11. The article according to any one of claims 1 - 9, wherein the article comprises an anti reflective glass plate and a frame to form a show case.

12. The article according to any one of claims 1 - 11, wherein the glass plate is a transparent inorganic material.

13. The article according to claim 12, wherein the glass plate has a transparency at a wavelength between 400 and 800 nm of 94% or higher at 2 mm thickness.

14. The article according to any one of claims 1 - 11, wherein the glass plate is a transparent organic material.

15. The article according to claim 14, wherein the glass plate has a transparency at a wavelength between 400 and 800 nm of 80% or higher at 2 mm thickness

16. The article according to any one of claims 1-14 wherein the glass plate exhibits a change in reflectivity of about 0.4% or less after 2 hrs immersion in glassex®.

17. Use of an anti-reflective glass plate in in-house applications, the glass plate having on at least a part of at least one of its surfaces a light reflection reducing coating, wherein the coating contains nano-size particles and a binder, the coating having an arithmetic average roughness of 2-50 nm, and having per reflective coated side a minimum reflection at a wavelength between 400 and 800 nm of about 2% of less.

18. Process of making a glass plate for in-house use, the process comprises the steps of
a. cleaning the glass
b. providing on at least a part of at least one side of the glass plate a coating, the coating comprising nano size particles, a binder and a solvent
c. drying and curing the coating
as to provide a coating layer having an arithmetic average roughness of 2-50 nm, and having per reflective coated side a minimum reflection at a wavelength between 400 and 800 nm of about 2% of less.
